# EUROPEAN PATENT SPECIFICATION

(11) **EP 1 061 237 B1**
(45) Date of publication and mention of the grant of the patent: **25.07.2007**
(21) Application number: 99906455.3
(22) Date of filing: 22.02.1999
(51) Int. Cl.: F01D 11/00, F16J 15/447

(54) **SEAL RING FOR STEAM TURBINE**
DICHTUNGSRING FÜR DAMPFTURBINE
BAGUE D'ETANCHEITE POUR TURBINE A VAPEUR

(30) Priority: 02.03.1998 JP 4944098
(43) Date of publication of application: 20.12.2000
(73) Proprietor: MITSUBISHI HEAVY INDUSTRIES, LTD., Tokyo 100-8315 (JP)
(72) Inventor: MAGOSHI, Ryotaro, Takasago Machinery Works, Arai-cho, Takasago-shi, Hyogo-ken 676 (JP); KONISHI, Tetsu, Takasago Machinery Works, Arai-cho, Takasago-shi, Hyogo-ken 676-0 (JP); YOSHIDA, Zenichi, Takasago Res. Dev. Ctr., Arai-cho, Takas ago-shi (JP)
(74) Representative: Henkel, Feiler & Hänzel
(86) International application number: PCT/JP1999/000770
(87) International publication number: WO 1999/045240

(56) References cited:
- JP-A- 57 116 972
- JP-A- 60 111 004
- JP-U- 63 003 570

## Description

### BACKGROUND OF THE INVENTION

### Field of the Invention

The present invention relates to a seal ring provided between a rotating portion and a fixed portion in a rotating machine of a steam turbine and the like.

### Description of the Prior Art

In a rotating machine of a steam turbine and the like, there is provided a seal fin for sealing between a rotating portion and a fixed portion facing to the rotating portion, for example, between a rotating outer circumferential surface formed by a tip of moving blade and a blade ring therefor or between an inner circumferential tip surface of stationary blade and a rotor surface facing thereto, as well as there is provided a seal ring supporting the seal fin.

Fig. 3 is a conceptual view of a representative seal ring in the prior art (e.g. JP-A-60111004 or JP-A-57116972). In Fig. 3, the seal ring is split into four pieces, upper and lower and right and left, in a circumferential direction thereof, as shown by split pieces 21a, 21b, 21c and 21d. The right and left split pieces 21c and 21d are supported by supporting members 23 and 24, respectively, fixedly in the horizontal direction but movably in the upward and downward directions, and between each of the split pieces 21a, 21b, 21c and 21d, there are interposed springs 22 for activating these split pieces in a parallel direction with a tangent of a rotating circumferential surface of the rotating portion. Thus, not only the split pieces 21c and 21d but also the split pieces 21a and 21b are movable in the upward and downward directions.

In the prior art seal ring constructed as mentioned above, while spring forces of the springs 22 act in the parallel direction with the tangent of the rotating portion circumferential surface, that is, substantially in the rotating portion circumferential direction, the split pieces 21a, 21b, 21c and 21d of the seal ring move in the upward and downward directions, respectively. That is, while the steam turbine is in operation with load, a high temperature high pressure steam flows around an outer circumference of the seal ring, and by the influence of this steam flow as well as by the load of own weight, the seal ring moves up and down, which causes deviations between the spring force direction of the springs 22 and the moving direction of each of the split pieces 21a, 21b, 21c and 21d of the seal ring. Thus, there occurs what is called a skirmish phenomenon of the split pieces in which mutually opposing end faces of the adjacent split pieces 21a, 21b, 21c and 21d deviate from a predetermined locus of movement to make an unusual engagement with each other and a sticking (a phenomenon of mutual biting) of the split pieces is liable to occur.

And if such a sticking once occurs, a clearance between the rotating portion and the fixed portion becomes larger to cause a leakage of fluid, such as steam, and there arises a problem of deterioration of the performance.

### SUMMARY OF THE INVENTION

In view of the problem in the prior art, it is an object of the present invention to provide a steam turbine seal ring which dissolves the problem in the prior art by ensuring movements of each portion of the seal ring so as to be free from deterioration of the sealing performance.

In order to attain said object, the present invention provides a steam turbine seal ring, characterized in being split into a plurality of seal ring pieces, each having a split plane on a portion so split, having a seal fin fitted on an inner circumferential surface thereof and being slidable in upward and downward directions along said split plane, and comprising a plurality of springs, each interposed between mutually adjacent ones of said seal ring pieces, for activating said seal ring pieces in the upward and downward directions along said split plane and a plurality of seal ring guides, each engaging with one of said seal ring pieces, for guiding said seal ring pieces in the upward and downward directions.

That is, in the present invention, the seal ring is split into plural pieces along the upward and downward directional split planes and the springs interposed between each of the seal ring pieces activate the seal ring pieces to move slidably in the upward and downward directions along the split planes. In addition thereto, the seal ring guides for guiding the seal ring pieces likewise restrict the seal ring pieces so as to move in the upward and downward directions. Thus, by the construction in which the three factors of the moving direction of the seal ring pieces, the acting direction of the springs and the guiding direction of the seal ring guides coincide with each other, the seal ring pieces move accurately so as not to invite deterioration of the sealing performance and a best suitable seal ring apparatus can be obtained.

Also, the present invention provides a steam turbine seal ring as mentioned above, characterized in that said seal ring pieces include an upper seal ring piece and a lower seal ring piece and there are provided a plurality of springs, each interposed between said upper seal ring piece and a portion of said seal ring guides engaging therewith or between said lower seal ring piece and a portion of said seal ring guides engaging therewith, for activating said upper and lower seal ring pieces in the upward and downward directions.

That is, in the present invention, the springs are interposed between the upper seal ring piece or the lower seal ring piece and the seal ring guides engaging therewith for activation in the upward and downward directions, and the upper and lower seal ring pieces are thereby in the state restricted by the spring forces between the upper seal ring guides and the lower seal ring guides. And when the steam turbine starts to operate with load in said state, a high temperature high pressure steam flows around the seal ring pieces to cause a differential pressure and also own weight of the seal ring pieces adds thereto, thereby the seal ring pieces tend to move toward the inner side thereof as they are in the state so restricted. Thus, the upper and lower seal ring pieces move toward the inner side thereof against the spring forces and clearances between the upper and lower seal fins provided on the inner circumferential surfaces of the upper and lower seal ring pieces and outer circumferential surface of the rotor corresponding thereto are made narrower so that steam leakage from the upper and lower seal fins is reduced sufficiently, which results in further enhancement of the sealing performance.

### BRIEF DESCRIPTION OF THE DRAWINGS

Fig. 1 is a schematic explanatory view showing an axial transverse cross section of a steam turbine seal ring of a first embodiment according to the present invention.
Fig. 2 is a schematic explanatory view showing an axial transverse cross section of a steam turbine seal ring of a second embodiment according to the present invention.

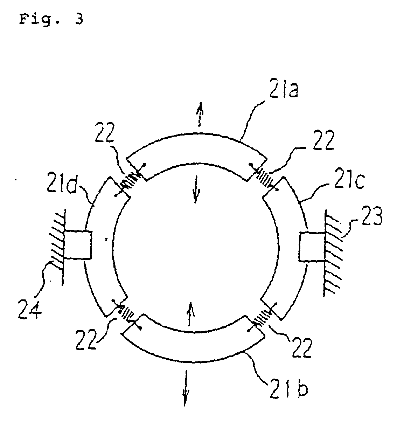

Fig. 3 is a conceptual view of a representative seal ring in the prior art in which seal ring pieces are connected to each other via a spring in the circumferential direction.

### Description of the Preferred Embodiments

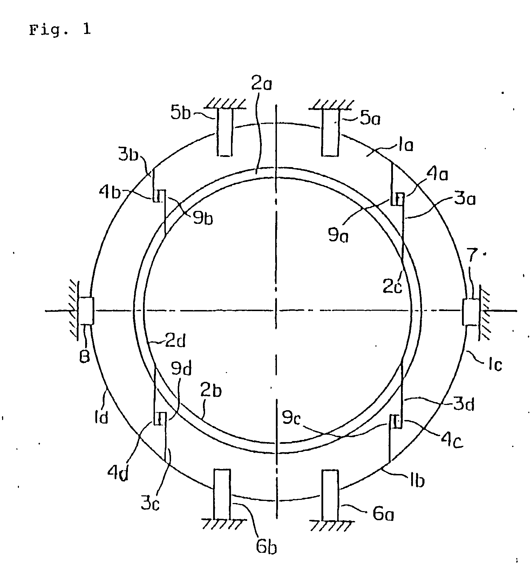

A first embodiment according to the present invention will be described with reference to Fig. 1. Fig. 1 is a schematic explanatory view showing an axial transverse cross section of a steam turbine seal ring of the first embodiment according to the present invention.

In Fig. 1, numeral 1a designates an upper seal ring piece, which is arranged to position in a range within 45° right and left from a perpendicular passing through an axial center of the seal ring or within 90° upward from the axial center. Numeral 1b designates a lower seal ring piece, which is arranged to position symmetrically with the upper seal ring piece 1a in a range within 90° downward from the axial center.

Numeral 1c designates a right side seal ring piece and numeral 1d designates a left side seal ring piece. The right side and left side seal ring pieces 1c and 1d, respectively, are arranged to position in a range within 90° right and left from the axial center so as to fill the spaces between the upper seal ring piece 1a and the lower seal ring piece 1b.

Each of the mentioned seal ring pieces 1a, 1b, 1c and 1d has a seal fin 2a, 2b, 2c and 2d, respectively, provided on an inner circumferential surface thereof. That is, the upper seal ring piece 1a has an upper seal fin 2a, the lower seal ring piece 1b has a lower seal fin 2b, the right side seal ring piece 1c has a right side seal fin 2c and the left side seal ring piece 1d has a left side seal fin 2d, respectively.

Numeral 3a designates a split plane at which one end face of the upper seal ring piece 1a and that of the right side seal ring piece 1c make contact with or separation from each other, and formation of this split plane 3a will be described with respect to the upper seal ring piece 1a

That is, the upper seal ring piece 1a has its outer circumferential surface first cut into downward in parallel with the perpendicular passing through the axial center. Then, on the way, the cutting is turned to the horizontal direction and is then turned again to the downward direction in parallel with said perpendicular to come out of the inner circumferential surface of the upper seal ring piece 1a.

On the other hand, if the split plane 3a is seen with respect to the right side seal ring piece 1c which positions in contact with the upper seal ring piece 1a, while the locus of cutting is basically same as the case of the upper seal ring piece 1a, there is a difference in the perpendicular position where the cutting is turned to the horizontal direction on the way, so that there is formed a space 9a between the upper seal ring piece 1a and the right side seal ring piece 1c, when they are mated with each other.

As the split plane 3a is formed by the end face of the upper seal ring piece 1a and that of the right side seal ring piece 1c, both configured as mentioned above, the upper seal ring piece 1a and the right side seal ring piece 1c are relatively movable in the upward and downward directions with the split plane 3a being a sliding plane therebetween.

Likewise, numerals 3b, 3c and 3d designate split planes, wherein the split plane 3b is formed between the other end face of the upper seal ring piece 1a and one end face of the left side seal ring piece 1d, the split plane 3c is formed between the other end face of the left side seal ring piece 1d and one end face of the lower seal ring piece 1b and the split plane 3d is formed between the other end face of the lower seal ring piece 1b and the other end face of the right side seal ring piece 1c. Also, numerals 9b, 9c and 9d designate spaces, wherein the space 9b is formed in the portion of the split plane 3b, the space 9c is formed in the portion of the split plane 3c and the space 9d is formed in the portion of the split plane 3d. Construction of the split planes 3b, 3c and 3d and the spaces 9b, 9c and 9d is substantially same as that of the split plane 3a and the space 9a as mentioned above and description thereon will be omitted.

Numeral 4a designates a spring, which is disposed in the space 9a extending in the upward and downward directions for activating the upper seal ring piece 1a and the right side seal ring piece 1c in the same directions along the split plane 3a. It is to be noted that numerals 4b, 4c and 4d likewise designate springs fitted in the spaces 9b, 9c and 9d, respectively, and the construction and function thereof being same as those of the spring 4a, description thereon will be omitted.

Numerals 5a and 5b designate seal ring guides, respectively, which project downward from an upper fixed portion of a blade ring and the like to engage with the upper seal ring piece 1a, thereby the upper seal ring piece 1a is guided so as to do upward and downward movements.

Numerals 6a and 6b designate also seal ring guides, respectively, which project upward from a lower fixed portion of the blade ring and the like, opposingly to the seal ring guides 5a and 5b of the upper position, to engage with the lower seal ring piece 1b, thereby the lower seal ring piece 1b is guided so as to do upward and downward movements.

Numerals 7 and 8 designate also seal ring guides, respectively, which are provided to a fixed portion opposingly to each other in the horizontal direction passing through the axial center. The seal ring guide 7 engages with the right side seal ring piece 1c and the seal ring guide 8 engages with the left side seal ring piece 1d, so that the right side seal ring piece 1c and the left side seal ring piece 1d are guided to do upward and downward movements, respectively.

In the present embodiment of the seal ring constructed as mentioned above, the upper seal ring piece 1a, the lower seal ring piece 1b, the right side seal ring piece 1c and the left side seal ring piece 1d, respectively, are guided by the corresponding seal ring guides 5a and 5b, 6a and 6b, 7 and 8 and are restricted by the corresponding split planes 3a, 3b, 3c and 3d slidably therealong in the upward and downward directions, and moreover the springs 4a, 4b, 4c and 4d are disposed in the spaces 9a, 9b, 9c and 9d of respective split planes 3a, 3b, 3c and 3d for activation of these seal ring pieces 1a, 1b, 1c and 1d in the upward and downward directions which are same directions as those of the spring movements, thereby a seal ring which is free from occurrence of the mentioned skirmish phenomenon and is able to exhibit a predetermined safe and secure seal function standing a differential pressure in each portion in the turbine can be obtained.

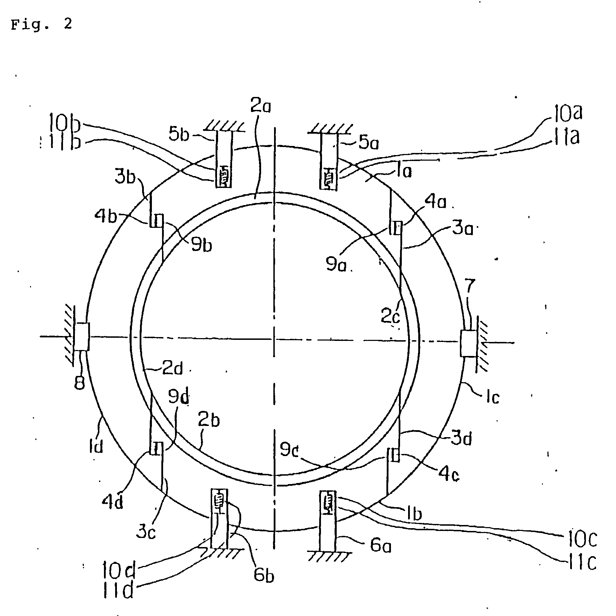

Next, a second embodiment according to the present invention will be described with reference to Fig. 2. It is to be noted that reference numerals 1 to 9 in Fig. 2 being for the same parts or components as those of the first embodiment shown in Fig. 1, repeated description thereon will be omitted and featured portions of the present embodiment shown by reference numerals 10a, 10b, 10c and 10d, and 11a, 11b, 11c and 11d will be described in detail.

In Fig. 2, numerals 10a and 10b designate spaces, respectively, formed right and left of the perpendicular passing through the axial center in the upper seal ring piece 1a. The spaces 10a and 10b are made such that grooves with which the seal ring guides 5a and 5b engage are elongated beyond tips of the seal ring guides 5a and 5b so as to form spaces and the seal ring guides 5a and 5b are slidable up and down smoothly along wall surfaces of the spaces 10a and 10b.

Numerals 10c and 10d designate also spaces, respectively, formed right and left of the perpendicular passing through the axial center in the lower seal ring piece 1b. The spaces 10c and 10d are made likewise such that grooves with which the seal ring guides 6a and 6b engage are elongated beyond tips of the seal ring guides 6a and 6b so as to form spaces and the seal ring guides 6a and 6b are slidable up and down smoothly along wall surfaces of the spaces 10c and 10d.

Numerals 11a and 11b designate springs inserted into the spaces 10a and 10b, respectively. The springs 11a and 11b are disposed between the tips of the seal ring guides 5a and 5b and bottom planes of the spaces 10a and 10b in the upper seal ring piece 1a so as to activate the upper seal ring piece 1a in the upward and downward directions.

Likewise, numerals 11c and 11d designate springs inserted into the spaces 10c and 10d, respectively. The springs 11c and 11d are disposed between the tips of the seal ring guides 6a and 6b and top planes of the spaces 10c and 10d in the lower seal ring piece 1b so as to activate the lower seal ring piece 1b in the upward and downward directions.

In the present embodiment of the seal ring constructed as mentioned above, the seal ring pieces 1a, 1b, 1c and 1d, respectively, are guided by the corresponding seal ring guides 5a and 5b, 6a and 6b, 7 and 8 and are restricted by corresponding split planes 3a, 3b, 3c and 3d slidably therealong in the upward and downward directions, and moreover the springs 4a, 4b, 4c and 4d are disposed in the spaces 9a, 9b, 9c and 9d of the respective split planes 3a, 3b, 3c and 3d for activation of the seal ring pieces 1a, 1b, 1c and 1d in the upward and downward directions which are same directions as those of the spring movements, thereby a seal ring which is free from occurrence of the mentioned skirmish phenomenon and is able to exhibit a predetermined safe and secure seal function standing a differential pressure in each portion in the turbine can be obtained.

Also, in the present embodiment, the following effect can be obtained in addition to the above.

That is, the springs 11a and 11b are disposed in the spaces 10a and 10b of the upper seal ring piece 1a and the springs 11c and 11d are disposed in the spaces 10c and 10d of the lower seal ring piece 1b. Thus, the upper seal ring piece 1a and the lower seal ring piece 1b, respectively, are in the state restricted by the spring forces between the tips of the seal ring guides 5a and 5b and those of the seal ring guides 6a and 6b via the right side and left side seal ring pieces 1c and 1d.

When load starts to act in said state, a high temperature high pressure steam flows around each of the seal ring pieces to cause a differential pressure as well as own weight of the seal ring piece itself adds thereto, thereby the seal ring pieces tend to move toward the inner side thereof as they are in the state so restricted mutually. As the result thereof, the upper and lower seal ring pieces 1a and 1b move toward the inner side thereof against the spring forces of the springs 11a and 11b, 11c and 11d as well as against the spring forces of the springs 4a and 4b, 4c and 4d in the spaces 9a, 9b, 9c and 9d.

Thus, the upper seal fin 2a and the lower seal fin 2b provided on the inner circumferential surfaces of the upper seal ring piece 1a and the lower seal ring piece 1b, respectively, move also toward the inner side, thereby clearances between the upper and lower seal fins 2a and 2b and outer circumferential surface of the rotor corresponding thereto are made narrower, which results in further enhancement of the sealing performance. Needless to mention, the spring forces of the springs 11a, 11b, 11c, and 11d are adjusted to such an extent that the upper and lower seal fins 2a and 2b which move corresponding to differential pressures may not come in contact with the opposing rotor portions.

It is understood that while the invention has been described with respect to the embodiments as illustrated, the invention is not limited thereto but embraces such modified forms thereof as come within the scope of the appended claims.

### INDUSTRIAL APPLICABILITY

According to the first one of the present invention, the construction is made such that the seal ring is split into plural pieces along the upward and downward directional split planes, springs interposed between each of the seal ring pieces activate the seal ring pieces to move slidably in the upward and downward directions along the split planes and the seal ring guides for guiding the seal ring pieces likewise restrict the seal ring pieces so as to move in the upward and downward directions. Thus, the three factors of the moving direction of the seal ring pieces, the acting direction of the springs and the guiding direction of the seal ring guides coincide with each other, the seal ring pieces carry out their predetermined actions accurately without skirmishing with each other, no deterioration of the sealing performance is caused and a best suitable steam turbine seal ring apparatus having safety and reliability can be obtained.

According to the second one of the present invention, in addition to the first one thereof, the construction is made such that the springs are interposed between the upper seal ring piece or the lower seal ring piece and the seal ring guides engaging therewith for activation in the upward and downward directions and the upper and lower seal ring pieces are thereby in the state restricted by the spring forces between the upper seal ring guides and the lower seal ring guides. Thus, in addition to the fact that the three factors of the moving direction of the seal ring pieces, the acting direction of the springs and the guiding direction of the seal ring guides coincide with each other so as not to cause skirmishing of the seal ring pieces, the upper and lower seal ring pieces move toward the inner side thereof against the spring forces in the steam turbine operation time with load, so that clearances between the upper and lower seal fins and outer circumferential surface of the rotor are made narrower, thereby the sealing performance is further enhanced and an excellent sealing function can be exhibited safely and securely.

## Claims

1. A steam turbine seal ring split into a plurality of seal ring pieces (1a, 1b, 1c, 1d), each having a split plane (3a, 3b, 3c, 3d) on a portion so split, having a seal fin (2a, 2b, 2c, 2d) fitted on an inner circumferential surface thereof and being slidable in upward and downward directions along said split plane, and comprising a plurality of springs (4a, 4b, 4c, 4d), each interposed between mutually adjacent ones of said seal ring pieces, **characterised in that** said seal ring pieces (1a, 1b, 1c, 1d) are activated in the upward and downward directions along said split plane (3a, 3b, 3c, 3d) by said springs (4a, 4b, 4c, 4d) and comprise a plurality of seal ring guides (5a, 5b, 6a, 6b, 7, 8), each engaging with one of said seal ring pieces, for guiding said seal ring pieces in the upward and downward directions.

2. A steam turbine seal ring as claimed in Claim 1, **characterized in that** said seal ring pieces include an upper seal ring piece (1a) and a lower seal ring piece (1b) and there are provided a plurality of springs (11a, 11b, 11c, 11d), each interposed between said upper seal ring piece (1a) and a portion (5a, 5b) of said seal ring guides engaging therewith or between said lower seal ring piece (1b) and a portion (6a, 6b) of said seal ring guides engaging therewith, for activating said upper and lower seal ring pieces (1a, 1b) in the upward and downward directions

## Patentansprüche

1. Dampfturbinen-Dichtungsring, der in mehrere Dichtungsringteile (1a,1b,1c,1d) unterteilt ist, wobei jeder eine Teilungsebene (3a,3b,3c,3d) an einem so getrennten Abschnitt aufweist, wobei eine Dichtungsrippe (2a,2b,2c,2d) an einer Innenumfangsfläche hiervon eingesetzt ist und in Aufwärts- und Abwärtsrichtungen entlang der Teilungsebene verschiebbar ist, mit mehreren Federn (4a,4b,4c,4d), die jeweils zwischen aneinandergrenzende der Dichtungsringteile eingefügt sind, **dadurch gekennzeichnet, dass** die Dichtungsringteile (1a, 1b, 1c, 1d) in den Aufwärts- und Abwärtsrichtungen entlang der Teilungsebene (3a,3b,3c,3d) durch die Federn (4a,4b,4c,4d) betätigt werden und mehrere Dichtungsringführungen (5a,5b,6a,6b,7,8) aufweisen, die jeweils mit einem der Dichtungsringteile in Eingriff stehen, um die Dichtungsringteile in den Aufwärts- und Abwärtsrichtungen zu führen.

2. Dampfturbinen-Dichtungsring nach Anspruch 1, **dadurch gekennzeichnet, dass** die Dichtungsringteile ein oberes Dichtungsringteil (1a) und ein unteres Dichtungsringteil (1b) aufweisen und mehrere Federn (11a,11b,11c,11d) vorgesehen sind, die jeweils zwischen das obere Dichtungsringteil (1a) und einen Abschnitt (5a,5b) der mit diesen in Eingriff stehenden Dichtungsringführungen oder zwischen das untere Dichtungsringteil (1b) und einen Abschnitt (6a,6b) der mit diesen in Eingriff stehenden Dichtungsringführungen eingefügt ist, um die oberen und unteren Dichtungsringteile (1a,1b) in der Aufwärts- und Abwärtsrichtung zu betätigen.

## Revendications

1. Bague d'étanchéité pour turbine à vapeur divisée en une pluralité de pièces de bague d'étanchéité (1a, 1b, 1c, 1d), chacune présentant un plan divisé (3a, 3b, 3c, 3d) sur une partie ainsi divisée, présentant une ailette d'étanchéité (2a, 2b, 2c, 2d) disposée sur sa surface circonférentielle interne et pouvant glisser dans les directions ascendante et descendante le long dudit plan divisé, et comprenant une pluralité de ressorts (4a, 4b, 4c, 4d), chacun intercalé entre celles mutuellement adjacentes desdites pièces de bague d'étanchéité, **caractérisée en ce que** lesdites pièces de bague d'étanchéité (1a, 1b, 1c, 1d) sont activées dans les directions ascendante et descendante le long dudit plan divisé (3a, 3b, 3c, 3d) par lesdits ressorts (4a, 4b, 4c, 4d) et comprennent une pluralité de guides (5a, 5b, 6a, 6b, 7, 8) de bague d'étanchéité, chacun se mettant en prise avec une desdites pièces de bague d'étanchéité, pour guider lesdites pièces de bague d'étanchéité dans les directions ascendante et descendante.

2. Bague d'étanchéité pour turbine à vapeur selon la revendication 1, **caractérisée en ce que** lesdites pièces de bague d'étanchéité comprennent une pièce de bague d'étanchéité supérieure (1a) et une pièce de bague d'étanchéité inférieure (1b) et **en ce qu'**il est prévu une pluralité de ressorts (11a, 11b, 11c, 11d), chacun intercalé entre ladite pièce de bague d'étanchéité supérieure (1a) et une partie (5a, 5b) desdits guides de bague d'étanchéité se mettant en prise avec celle-ci ou entre ladite pièce de bague d'étanchéité inférieure (1b) et une partie (6a, 6b) desdits guides de bague d'étanchéité se mettant en prise avec celle-ci, pour activer lesdites pièces de bague d'étanchéité supérieure et inférieure (1a, 1b) dans les directions ascendante et descendante.
